# EUROPEAN PATENT APPLICATION

(11) **EP 3 564 609 A1**
(43) Date of publication of application: **06.11.2019**
(21) Application number: 18170377.8
(22) Date of filing: 02.05.2018
(51) Int. Cl.: F26B 3/08, F26B 17/10, A23L 3/50, A23C 1/04, C13K 5/00, A23C 9/00

(54) **APPARATUS AND METHOD FOR PRODUCING FINELY DIVIDED PRODUCT PARTICLES**

(71) Applicant: Spx Flow Technology Danmark A/S, 2860 Søborg (DK)
(72) Inventor: WAGNER, Peter, 2970 Hørsholm (DK)
(74) Representative: Nordic Patent Service A/S

(57) **Abstract**

Disclosed is an apparatus for producing finely divided product particles with reduced amounts of over-sized product particles, comprising an agitated fluid bed for comminution and partly drying of a humid product, a drying fluid bed for further drying of the comminuted and partly dried product, and a passage way between the agitated fluid bed and the drying fluid bed, wherein a weir is positioned in the passage way, said weir having openings of a size capable of retaining over-sized product particles and allowing particles of a desired size to pass to drying fluid bed.

## Description

### TECHNICAL FIELD

The disclosure relates to an apparatus and a method for producing finely divided product particles with reduced amounts of over-sized product particles. Thus, the apparatus and the associated method offer a more economical process with a higher portion of the starting product resulting in a product particles size in accordance with a predefined specification.

### BACKGROUND

Lactose is an important by-product of the dairy industry with many important uses such as infant nutrition and in pharmaceutical products. It is a water-soluble molecule present naturally in milk wherein it makes up 2-8% of the milk by weight.

WO 2016/071397 A1 discloses a method of crystallizing of α-lactose from an aqueous solution comprising dissolved β-lactose and α-lactose. The method includes a mutarotation loop system for converting β-lactose to α-lactose during crystallisation of α-lactose.

WO 2016/135172 A1 discloses a process for producing low ash lactose from concentrated whey permeate using a clarifier with acid and a device for carrying out the process. The process includes the formation of precipitates of calcium phosphate in the whey permeate, where a fraction of the precipitates has a size larger than clarifier cut-off value. In a clarification step the fraction of the larger-sized precipitates is removed and in a subsequent step the remaining smaller-sized precipitates are dissolved by the addition of an acid to obtain a whey permeate free of precipitates. Finally, lactose is allowed to precipitate from the precipitate free whey permeate.

WO 2016/193138 discloses second pass lactose crystallization. The method comprises obtaining initially, from a lactose crystallization process, mother liquor and wash water generated in that process. The obtained mother liquor and wash water are collected and not discarded. Thereafter, the collected mother liquor and wash water are subjected to purification and concentration in a batch process contrary to the known continuous processes, performed independently of the lactose crystallization process. Aqueous solutions comprising lactose obtained as a result of the independent purification and concentration process accordingly, comprise reduced amounts of the impurities usually comprised in the by-products of the lactose crystallization process. The aqueous solution comprising lactose can then be collected and re-used as a lactose source in a lactose crystallization process, either on the same process equipment which supplied the original batch or on separate equipment.

The humid lactose is subsequently dried to obtain solid lactose crystals. The drying may be performed in a fluid bed. Similar to other dairy products like whey permeate, lactose tends to form lumps during drying. To avoid blocking of the fluid bed it is typically equipped with an agitator which disintegrates the lumps to obtain particles of a smaller size. After a certain retention time in the agitated fluid bed the amounts of larger lumps is reduced to a sufficiently low level and enters over a weir a drying fluid bed for further drying. The height of the weir influences the retention time in the agitated fluid bed. Usually the height of the weir is adjusted to a level where an acceptable level of lumps not disintegrated to the desired particle size appear in the product exiting the drying process.

The present invention aims at reducing the retention time of the disintegrated powder in the agitated fluid bed. Furthermore, it is an object of the invention to reduce the amounts of oversized particles in the product leaving the fluid beds. The oversized particles need to be separated from the particles according to the specification. Furthermore, the oversized particles typically have a lower value than the product with the desired maximum size.

### SUMMARY

The present invention relates to an apparatus for producing finely divided product particles with reduced amounts of over-sized product particles, comprising an agitated fluid bed for comminution and partly drying of a humid product, a drying fluid bed for further drying of the comminuted and partly dried product, and a passage way between the agitated fluid bed and the drying fluid bed, wherein a weir is positioned in the passage way, said weir having openings of a size capable of retaining over-sized product particles and allowing particles of a desired size to pass to drying fluid bed.

Various products form lumps when dried, including lactose and non-caking whey permeate. Traditionally, the lumps have been disintegrated in an agitated fluid bed. To obtain a sufficient retention time and thus a sufficient degree of disintegration of the lumps to particles having a desired small size, a weir between two drying bed sections have been provided. Upon increasing the height of the weir, the retention time is increased to allow the lumps to be milled or comminuted for a longer time in order to reduce the amount of over-sized particles. The present invention suggests providing openings of a size capable of retaining oversized product particles and allowing minor particles to escape through the openings or alternatively, over the weir. The presence of openings opposed to a higher weir level result in a shorter residence time of the disintegrated powder, a longer residence time of the non-disintegrated lumps and/or a minor amounts of oversized particles at the exit of the fluid beds.

The openings define the size of the particles appearing in the final product. In a preferred aspect of the invention, the openings have a size between 2 and 10 mm, preferably between 3 and 7 mm. Openings having a size of about 4 mm are suitable for products such as lactose. It will be appreciated by a person skilled in the art that the term "size" is to be understood as the minimum distance between opposing edges of any geometrical form. Openings are usually distanced from each other by an impervious part of the weir having a distance of 1 to 5 times the size of the openings.

The openings serve the purpose of retaining oversized particles in the agitated fluid bed. However, in a preferred embodiment of the invention the openings have sharp edges to promote the disintegration of the over-sized particles.

As some product types may tend to occlude the openings and thus inhibit the passing of particles having a size below the pre-determined cutoff value it may be advantageous that the openings are smaller on the side of the weir facing the agitated fluid bed.

The openings may in principle have any geometrical form allowing particles having a size below the predetermined particle size of passing the opening and retaining oversized particles. In preferred embodiments of the invention the openings in the weir are provided by slits, holes, or mesh in the weir.

In a preferred aspect of the invention, the openings in the weir are provided by vertical slits. Vertical slits having openings smaller on the side of the weir facing towards the agitated fluid bed and consequently larger openings facing towards the drying fluid bed may be provided during the production process. Thus, the weir may be produced from a planner metal sheet, which subsequently is provided with the slits. When the weir is bended in the partly cylindrical shape, the width or opening of the slit directed towards the agitated fluid bed will be slightly smaller than the width or opening of the slits directed towards the drying bed. The asymmetrical geometric form of the slits, will reduce the tendency of the slits to become occluded by the particles to be dried.

To ensure sufficient mechanical stability of the weir the slits may be grouped in two sections separated by an impervious band of metal. The center of the vertical slits in the weir are usually separated from each other by 1.5 to 5 times the width of the slit.

In some circumstances of the invention it may be desired to modify an existing agitated fluid bed by attaching an upper part comprising openings. Thus, the modified weir is composed of a lower impervious weir part and an upper part having openings of a size capable of retaining over-sized product particles.

In agitated fluid beds with cylindrical drying chamber the agitated fluid bed may comprise vertically extending cylindrical walls in which the weir having openings is provided as a part of the circumference of the cylindrical walls. The openings may be present essentially in the entire part of the circumference covered by the weir, i.e. such as 50%, 60%, 70%, 80%, or 90% of the circumference of the fluid bed chamber.

Usually, the lower part of the weir it is not provided with openings to prevent occlusion by humid product particles. The lower part impervious to the particles usually extends 10% to 50% of the height of the weir. In a certain embodiment of the invention, the area of the openings compared to the entire area of the weir is higher than 5%, such as higher than 10% and preferably higher than 15%.

The particles having a size below a predetermined value can enter the drying fluid bed from the agitated fluid bed through the openings of the weir and/or over the weir. The height of the weir is not of crucial importance for the process and may in a particular embodiment extend to the roof, i.e. the weir covers the entire area of the passage way between the of the agitated fluid bed and the drying fluid bed. In this embodiment, the particles may only enter the drying fluid bed through the openings of the weir. Due to the relative low importance of the height of the weir it may be more appropriate to measure the degree of openness as the area of the openings per horizontal length of the weir. Thus, in a certain embodiment of the invention the area of the openings is 1.5 dm² or more per horizontal meter of the weir. In suitable embodiments of the invention, the area of the openings is 3 dm² or more, such as 5 dm² or more, and preferably 7 dm² or more per horizontal meter of the weir.

To improve the efficiency of the process it may be desirable to use more than one drying fluid bed. Thus, in an embodiment of the invention, an outlet from the drying fluid bed is in contact with an inlet of a second drying fluid bed. The amount and temperature, i.e. the drying capacity, of the drying gas may be controlled at the inlets of the agitated fluid bed, the first drying fluid bed, and the second drying fluid bed. The invention furthermore relates to a method for producing finely divided product particles with reduced amount of oversized product particles, comprising the steps of:
a. agitating a fluid bed comprising humid product for production of finely divided product particles by comminuting and partly drying of the humid product,
b. passing the finely divided product particles through a passageway to a drying fluid bed, wherein a weir having openings of a size capable of retaining over-sized product particles and allowing particles of a desired size to pass is positioned in the passage way, and
c. retaining over-sized product particles and allowing particles of a desired size to pass to drying fluid bed.

The method of the invention is especially suitable when the humid product is lactose or whey permeate. The openings suitably have a size between 2 and 10 mm, preferably between 3 and 7 mm. The openings in a certain embodiment of the invention have sharp edges to promote the disintegration of the over-sized particles. Furthermore, the openings preferably are smaller on the side of the weir facing the agitated fluid bed. Usually, the openings in the weir are provided by slits, holes, or mesh in the weir. Preferably, the openings in the weir are provided by vertical slits. According to the method of the invention, the weir may be composed of a lower impervious weir part and an upper part having openings of a size capable of retaining over-sized product particles. In suitable embodiments of the invention, the agitated fluid bed comprises vertically extending cylindrical walls in which the weir having openings is provided as a part of the circumference of the cylindrical walls. Preferably, the area of the openings compared to the entire area of the weir is higher than 5%, such as higher than 10% and preferably higher than 15%. In addition, an outlet from the drying fluid bed may be in contact with an inlet of a second drying fluid bed.

These and other aspects will be apparent from and the embodiment(s) described below.

### BRIEF DESCRIPTION OF THE DRAWINGS

Fig. 1 discloses an apparatus having an agitated fluid bed, and two drying fluid beds;
Fig. 2a and 2b disclose a weir having vertical slits.

### DETAILED DESCRIPTION

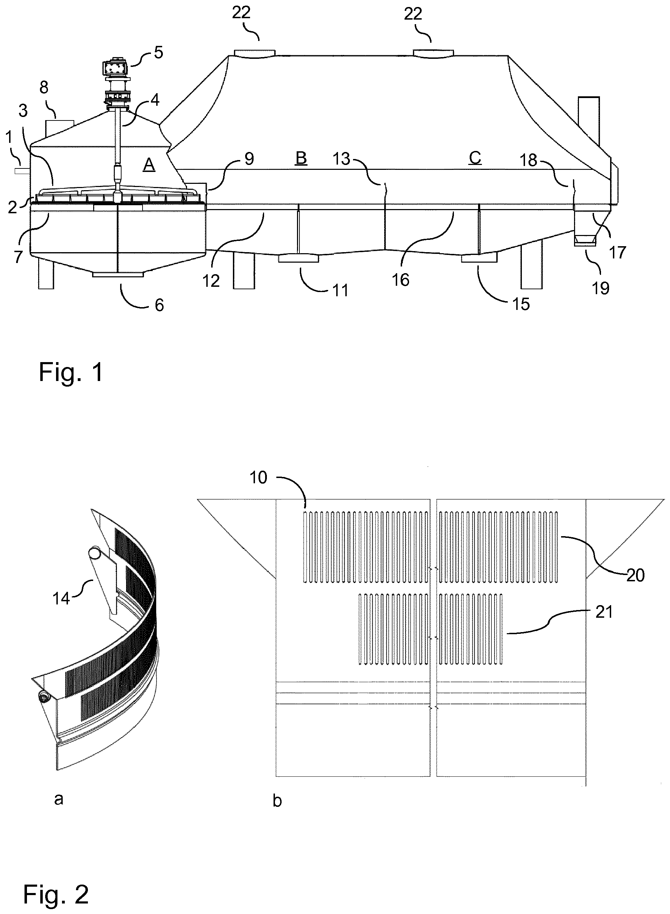

Figure 1 discloses an embodiment of the present invention comprising an agitated fluid bed (A), a first drying fluid bed (B) and a second drying fluid bed (C).

The agitated fluid bed comprises an inlet for a humid product to be dried 1, and a rotating agitator 2 for distributing the humid product in the fluid bed. The rotating agitator comprises wings 3 centrally connected to a shaft 4. The shaft is connected to an electrical motor 5 for rotating the shaft and the attached wings.

An inlet for drying air 6 is provided in the bottom of the agitated fluid bed. The drying air is distributed in the lower part of the fluid bed and penetrates through a plate with holes 7 into the agitated fluid bed. During operation of the fluid bed the particles will be milled to smaller particles by the rotation of the agitator and the collision of the particles. The humid product enters at inlet 8. The spent humid drying air exits at outlet 22.

A weir 9 is provided between the agitated fluid bed and a first drying fluid bed B. The weir is shown in detail in figure 2a and 2b. The weir comprises openings 10 as elongated, vertical slits grouped in 2 sections. The width of the slits defines the desired particle size, as particles below a certain cutoff value will be allowed to permeate the weir whereas particles above a certain cutoff size (oversized particles) will be rejected. In the embodiment shown in figure 2a and 2b the width of the slits is about 4 mm.

The slits may be provided with sharp edges, which will assist in the disintegration of larger sized particles. The weir is produced from a planner metal sheet, which subsequently is provided with the slits. When the weir is bended in the partly cylindrical shape the width of the slit directed towards the agitated fluid bed will be slightly smaller than the width of the slits directed towards the drying bed, which will reduce the tendency of the slits to become occluded by the particles is to be dried.

To ensure sufficient mechanical stability of the weir the slits are grouped in two sections 20 and 21. The upper section is generally larger than the lower section to allow for the presence of adaptors 14. The adapters correspond to a not shown counterpart of the fluid bed chamber to ensure easy installation and optionally modification of the weir. Alternatively, the weir may be welded to the interior of the agitated fluid bed.

The particles that have penetrated the slits of the weir enter into the first drying fluid bed B. optionally, the fluid bed and/or the operation conditions may be designed to allow a certain spill-over of particles, i.e. a part of the particles passing from the agitated fluid bed to the drying fluid bed moves over the top of the weir.

The first drying fluid bed comprises an inlet 11 for hot drying gas. The drying gas entering into inlet 11 is distributed to the fluid bed through a plate with holes 12. After drying in the first drying fluid bed the particles enter a second drying fluid bed C over a second weir 13. The second weir is impervious to the particles.

The second drying fluid bed comprises an inlet 15 for hot drying gas. The drying gas entering inlet 15 is distributed to the fluid bed through a plate with holes 16. After drying in the second drying fluid bed the particles enter outlet 17 over a third weir 18. The third weir is impervious to the particles.

The particles exiting the apparatus is subsequently cooled and sifted. In the sifter oversized particles are rejected whereas particles below a certain cutoff particles size are allowed to be further processed. The particles that has passed through the sifter exits the apparatus according to the invention at outlet 19. As the particles are generally hot, they are typically cooled before being packaged into bags or other types of containers.

As a general note, structures and features that are the same or similar to corresponding structures and features previously described or shown herein are denoted by the same reference numeral as previously used for simplicity.

The various aspects and implementations has been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

### EXAMPLE

An apparatus as shown in Figure 1 was provided with a traditional impervious weir, extending vertically to a height of 300 mm. The amount of over-sized particles retained by the outlet filter was 4-6%.

A weir as disclosed in figure 2 was constructed. The height of the weir was 500 mm in total and the slits started at a height of about 200 mm. The width of each slit was 4 mm, the height was 125 mm, and the distance between the center of two neighboring slits was 10 mm. The slits were grouped in two sections with a vertical distance between each section of 25 mm. The number of slits in the upper section was 172 and the number of slits in the lower section was 152, resulting in a hole area compared to the entire area of the weir of 17.7%.

After the installation of the weir with openings, the amount of oversized particles retained at the outlet filter was reduced to 0.4%.

## Claims

1. An apparatus for producing finely divided product particles with reduced amounts of over-sized product particles, comprising an agitated fluid bed for comminution and partly drying of a humid product, a drying fluid bed for further drying of the comminuted and partly dried product, and a passage way between the agitated fluid bed and the drying fluid bed, wherein a weir is positioned in the passage way, said weir having openings of a size capable of retaining over-sized product particles and allowing particles of a desired size to pass to drying fluid bed.

2. The apparatus according to claim 1, wherein the openings have a size between 2 and 10 mm, preferably between 3 and 7 mm.

3. The apparatus according to anyone of the claims 1 or 2, wherein the openings have sharp edges to promote the disintegration of the over-sized particles.

4. The apparatus according to anyone of the claims 1 to 3, wherein the openings are smaller on the side of the weir facing the agitated fluid bed.

5. The apparatus according to anyone of the claims 1 to 4, wherein the openings in the weir are provided by vertical slits.

6. The apparatus according to anyone of claim 1 to 5, wherein the weir is composed of a lower impervious weir part and an upper part having openings of a size capable of retaining over-sized product particles.

7. The apparatus according to anyone of the claims 1 to 6, wherein the agitated fluid bed comprises vertically extending cylindrical walls in which the weir having openings is provided as a part of the circumference of the cylindrical walls.

8. The apparatus according to anyone of the claims 1 to 7, wherein the area of the openings compared to the entire area of the weir is higher than 5%, such as higher than 10% and preferably higher than 15%.

9. The apparatus according to anyone of claims 1 to 10, wherein an outlet from the drying fluid bed is in contact with an inlet of a second drying and/or a cooling fluid bed.

10. A method for producing finely divided product particles with reduced amount of oversized product particles, comprising the steps of:
a. agitating a fluid bed comprising humid product for production of finely divided product particles by comminuting and partly drying of the humid product,
b. passing the finely divided product particles through a passageway to a drying fluid bed, wherein a weir having openings of a size capable of retaining over-sized product particles and allowing particles of a desired size to pass is positioned in the passage way, and
c. retaining over-sized product particles and allowing particles of a desired size to pass to drying fluid bed.

11. The method according to claim 10, wherein the humid product is lactose or whey permeate.

12. The method according to claim 10 or 11, wherein the openings have a size between 2 and 10 mm, preferably between 3 and 7 mm.

13. The method according to anyone of the claims 10 to 12, wherein the openings have sharp edges to promote the disintegration of the over-sized particles and/or wherein the openings are smaller on the side of the weir facing the agitated fluid bed.

14. The method according to anyone of the claims 10 to 13, wherein the openings in the weir are provided by vertical slits.

15. The method according to anyone of the claims 10 to 14, wherein the area of the openings compared to the entire area of the weir is higher than 5%, such as higher than 10% and preferably higher than 15%.
